# EUROPEAN PATENT APPLICATION

(11) **EP 1 873 729 A1**
(43) Date of publication of application: **02.01.2008**
(21) Application number: 07011276.8
(22) Date of filing: 08.06.2007
(51) Int. Cl.: G07F 7/10, G07G 1/12, G06Q 20/00

(54) **Portable terminal, settlement method, and program**

(30) Priority: 29.06.2006 JP 2006179076
(71) Applicant: Sony Corporation, Minato-ku Tokyo 108-0075 (JP)
(72) Inventor: Morita, Tadashi, Tokyo 108-0075 (JP)
(74) Representative: Müller - Hoffmann & Partner

(57) **Abstract**

A portable terminal includes an acquisition unit adapted to acquire authentication information including identification information from a first non-contact IC card brought close to the portable terminal, an authentication unit adapted to authenticate a user on the basis of identification information input by the user by operating one or more keys and identification information included in the authentication information acquired by the acquisition unit, and a settlement unit adapted to, if the user is determined to be authentic by the authentication unit, perform a settlement process in accordance with electronic money information stored in a second non-contact IC card brought close to the portable terminal.

## Description

### CROSS REFERENCES TO RELATED APPLICATIONS

The present invention contains subject matter related to Japanese Patent Application JP 2006-179076 filed in the Japanese Patent Office on June 29, 2006, the entire contents of which are incorporated herein by reference.

### BACKGROUND OF THE INVENTION

### 1. Field of the Invention

The present invention relates to a portable terminal, a settlement method, and a program, and more particularly, to a portable terminal, a settlement method, and a program, for performing a settlement process using electronic money information in a secure manner such that the portable terminal is prevented from being used fraudulently and in a convenient manner such that a single portable terminal is allowed to be used by a plurality of persons.

### 2. Description of the Related Art

In recent years, a settlement service using electronic money information stored in a non-contact IC card has become popular. Edy (trademark) is an example of such a settlement service. In the settlement service, a user is allowed to make payment simply by putting a non-contact IC card close to a settlement terminal.

In a case where the settlement terminal is of a portable type, there is a possibility that the terminal is lost. A technique is known to prevent the terminal from being used by an unauthorized person after the terminal was lost.

For example, in one of such techniques, when a user turns on the terminal to perform settlement using the terminal, the user is prompted to input a PIN (Personal Identification Number) code or biometric information such as a fingerprint. The input information is verified by comparing it with information registered in advance in the terminal, and the settlement is allowed only when it is determined that the input information is valid.

In a technique disclosed in Japanese Unexamined Patent Application Publication No. 2003-203215, authentication of a user is performed based on authentication information read from a memory card.

### SUMMARY OF THE INVENTION

In the known technique in which when a user starts using a terminal, the user is authenticated by comparing a PIN code or biometric information input by the user with information registered in the terminal, if the information registered in the terminal is stolen or tampered with, it is difficult to prevent the terminal from being used by an unauthorized user. In many cases, to avoid the above problem, once information is registered in the terminal, the registered information cannot be easily changed. However, this technique is difficult to be used in a case where the user of the terminal changes frequently or in a case where the single terminal is used by a plurality of users.

In view of the above, the present invention provides a portable terminal, a settlement method, and a program, for performing a settlement process using electronic money information in a secure manner such that a portable terminal is prevented from being used fraudulently and in a convenient manner such that a single portable terminal is allowed to be used by a plurality of persons.

According to an embodiment of the present invention, there is provided a portable terminal including acquisition means for acquiring authentication information including identification information from a first non-contact IC card brought close to the portable terminal, authentication means for authenticating a user on the basis of identification information input by the user by operating one or more keys and identification information included in the authentication information acquired by the acquisition means, and settlement means for, if the user is determined to be authentic by the authentication means, performing a settlement process in accordance with electronic money information stored in a second non-contact IC card brought close to the portable terminal.

The portable terminal may further include display means for displaying information. In this case, the authentication means may display, on the display means, information prompting a user identified by information included in the authentication information to input identification information by operating one or more keys, and may verify the authenticity of the user on the basis of the identification information input by the user and the identification information included in the authentication information.

The authentication information may be stored in an encrypted form in the first non-contact IC card. In this case, the authentication means may decrypt the encrypted authentication information acquired by the acquisition means by using key information prestored in the authentication means thereby acquiring identification information used in verification of the authenticity of the user.

When the settlement means completes the settlement process, the settlement means may store information included in the authentication information acquired by the acquisition means into the second non-contact IC card together with identification information identifying the portable terminal.

According to an embodiment of the present invention, there is provided a settlement method/program including the steps of acquiring authentication information including identification information from a first non-contact IC card brought close to a portable terminal, authenticating a user on the basis of identification information input by the user by operating one or more keys and identification information included in the authentication information acquired in the acquisition step, and if the user is determined to be authentic in the authentication step, performing a settlement process in accordance with electronic money information stored in a second non-contact IC card brought close to the portable terminal.

In the embodiments of the present invention, as described above, authentication information including identification information is acquired from the first non-contact IC card brought close to the portable terminal, and a user is authenticated on the basis of identification information input by the user by operating one or more keys and identification information included in the acquired authentication information. If the user is determined to be authentic, the settlement process is performed in accordance with electronic money information stored in the second non-contact IC card brought close to the portable terminal.

Thus, the present invention provides an advantage that a settlement process can be performed using electronic money information in a secure manner such that the portable terminal is prevented from being used fraudulently and in a convenient manner such that a single portable terminal is allowed to be used by a plurality of persons.

### BRIEF DESCRIPTION OF THE DRAWINGS

Fig. 1 a diagram showing an external appearance of a portable settlement terminal according to an embodiment of the present invention;
Fig. 2 shows an example of data stored in a person authentication card;
Fig. 3 shows an example of data stored in an electronic money card;
Fig. 4 is a block diagram showing an example of a hardware configuration of a portable settlement terminal;
Fig. 5 is a block diagram showing an example of a functional configuration of a portable settlement terminal;
Fig. 6 is a flow chart showing an process performed by a portable settlement terminal according to an embodiment of the present invention; and
Fig. 7 is a flow chart showing the details of a settlement process performed in step S14 in the process shown in Fig. 6.

### DESCRIPTION OF THE PREFERRED EMBODIMENTS

Before embodiments of the present invention are described, correspondence between specific examples of parts/steps in the embodiments and those essential to the present invention. Note that the purpose of the following description is to indicate that specific examples of the present invention are described in the embodiments, and thus the purpose of the following description is not to limit the present invention to those described below. That is, there can be a part/step that is not described in the following description of the correspondence but that corresponds to a part/step according to an embodiment of the present invention. Conversely, an example of a part/step, which is described in the following description as corresponding to a particular claim, can correspond to a part/step of another embodiment of the present invention.

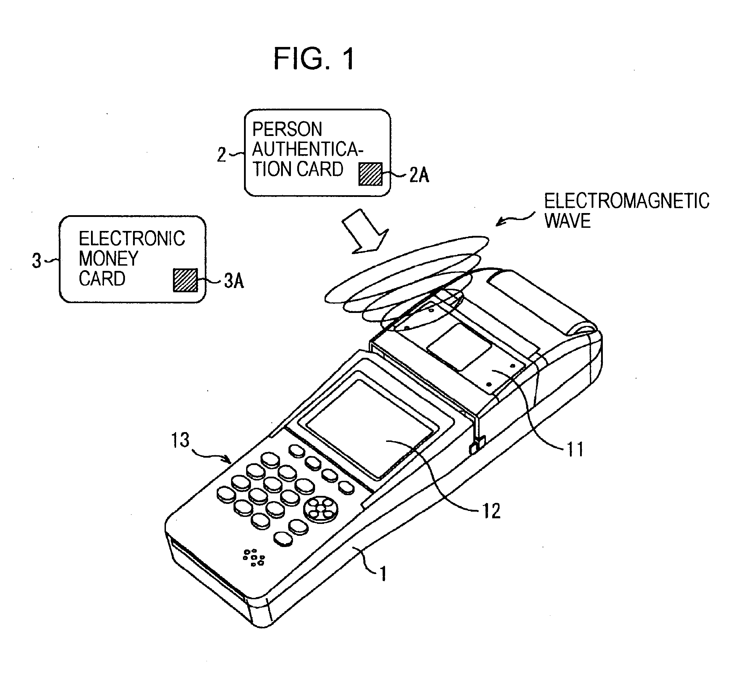

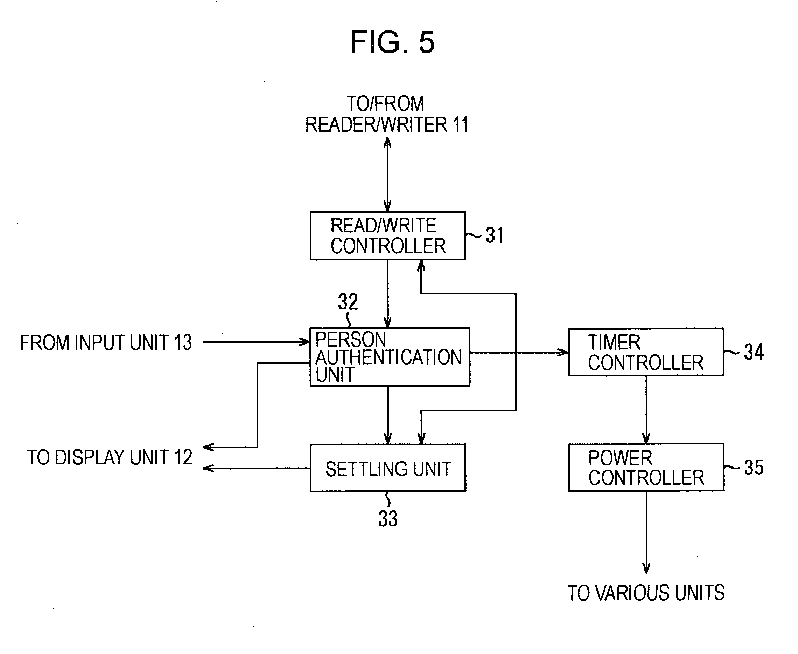

In an embodiment of the present invention, there is provided a portable terminal (for example, a portable settlement terminal 1 shown in Fig. 1) including acquisition means (for example, a read/write controller 31 shown in Fig. 5) for acquiring authentication information including identification information from a first non-contact IC card brought close to the portable terminal, authentication means (for example, a person authentication unit 32 shown in Fig. 5) for authenticating a user on the basis of identification information input by the user by operating one or more keys and identification information included in the authentication information acquired by the acquisition means, and settlement means (for example, a settling unit 33 shown in Fig. 5) for, if the user is determined to be authentic by the authentication means, performing a settlement process in accordance with electronic money information stored in a second non-contact IC card brought close to the portable terminal.

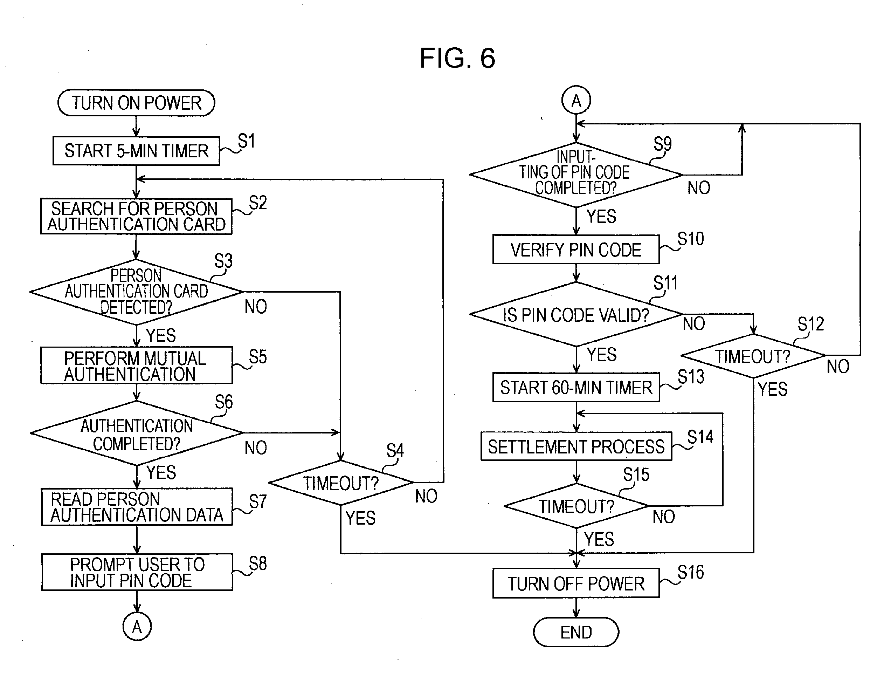

In an embodiment of the present invention, there is provided a settlement method/program including the steps of acquiring authentication information including identification information from a first non-contact IC card brought close to a portable terminal, authenticating a user on the basis of identification information input by the user by operating one or more keys and identification information included in the authentication information acquired in the acquisition step, and if the user is determined to be authentic in the authentication step, performing a settlement process in accordance with electronic money information stored in a second non-contact IC card brought close to the portable terminal (for example, in step 14 shown in Fig. 6).

Now, specific embodiments of the present invention are described below with reference to the accompanying drawings.

Fig. 1 shows an external appearance of a portable settlement terminal 1 according to an embodiment of the present invention.

In the example shown in Fig. 1, the portable settlement terminal 1 is in a situation in which a person authentication card 2 and an electronic money card 3 are brought close to the portable settlement terminal 1. The person authentication card 2 is realized in the form of a non-contact IC card and is used to authenticate a user who is going to use the portable settlement terminal 1. The electronic money card 3 is also realized in the form of a non-contact IC card, but the electronic money card 3 is used by a user of the electronic money card 3 to make payment using electronic money data.

Note that in practical use, the person authentication card 2 and the electronic money card 3 are not brought close to the portable settlement terminal 1 at the same time, but they are brought close to the portable settlement terminal 1 separately. For example, the person authentication card 2 may be first brought close to the portable settlement terminal 1. After a user of the portable settlement terminal 1 is authenticated in accordance with information stored in the person authentication card 2, the electronic money card 3 may be brought close to the portable settlement terminal 1. In response, the portable settlement terminal 1 makes settlement in accordance with electronic money data stored in the electronic money card 3.

That is, the portable settlement terminal 1 and the person authentication card 2 are used by a person who is to receive payment, and the electronic money card 3 is used by a person which is to make payment.

As shown in Fig. 1, the portable settlement terminal 1 is formed to have a size that allows the user to hold it with one hand. The portable settlement terminal 1 has a reader/writer 11, a display unit 12, and an input unit 13, which are all disposed on a case of the portable settlement terminal 1. In the example shown in Fig. 1, the reader/writer 11, the display unit 12, and the input unit 13 are all disposed on the same surface of the case.

The reader/writer 11 is adapted to wirelessly communicate via an electromagnetic wave with an IC chip 2A disposed in the person authentication card 2 and with an IC chip 3A disposed in the electronic money card 3, and to read/write information from/to the IC chips.

The display unit 12 is, for example, an LCD (Liquid Crystal Display) and is used to display various kinds of information.

The input unit 13 includes an alphanumeric key pad and is used by the user of the portable settlement terminal 1, that is, by a person who is to receive payment.

Now, a settlement process using the portable settlement terminal 1 is described below.

As described above, before settlement, the user of the portable settlement terminal 1 is required to be authenticated by the portable settlement terminal 1 by using the person authentication card 2. More particularly, if the user turns on the power of the portable settlement terminal 1 and brings the person authentication card 2 close to the reader/writer 11, then person authentication data is read from the person authentication card 2 (more particularly, the IC chip 2A) into the portable settlement terminal 1.

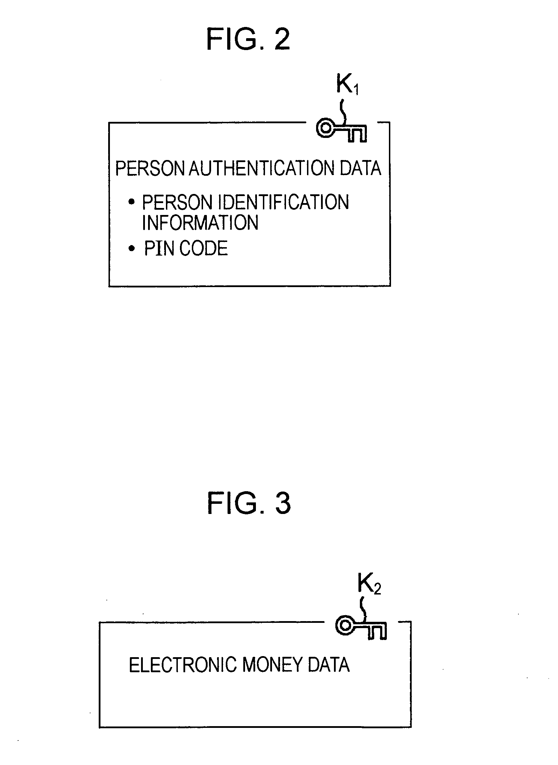

Fig. 2 shows an example of person authentication data stored in the person authentication card 2.

As shown in Fig. 2, the person authentication data includes person identification information such as a user name or a user ID which identifies a person and also includes a PIN code including a particular number of alphanumeric characters. The person authentication data is written in advance in the person authentication card 2 by using a particular terminal, and the user of the portable settlement terminal 1 knows the PIN code written in the person authentication card 2. A key used in writing the person authentication data in the person authentication card 2 may be different from a key used in reading the person authentication data from the portable settlement terminal 1.

As shown in Fig. 2, the person authentication data is stored in a form encrypted using a private key K1 in the person authentication card 2. A decryption key corresponding to the private key K1 is secretly registered in the portable settlement terminal 1 in a proper manner. In the portable settlement terminal 1, the decryption key corresponding to the private key K1 is managed by a tamper-resistant chip.

Because the person authentication data is stored in the form encrypted using the private key K1 as described above, it is possible to prevent the PIN code and other information included in the person authentication data from being stolen.

Referring again to Fig. 1, when the person authentication data is read from the person authentication card 2, the portable settlement terminal 1 decrypts the encrypted person authentication data by using the key registered in the portable settlement terminal 1, and the portable settlement terminal 1 displays a message on the display unit 12 to prompt the user, identified by the person identification information included in the person authentication data, to input the PIN code. An example of the message displayed on the display unit 12 is "Mr. XXX, please input your PIN code."

If, in response to the message, the user inputs his/her PIN code by operating the input unit 13, authentication of the user is performed by comparing the input PIN code with the PIN code included in the person authentication data which has been read from the person authentication card 2 and has been decrypted. When these PIN codes are identical to each other, it is determined that the user who is going to use the portable settlement terminal 1 is an authorized user of the portable settlement terminal 1. However, if the input PIN code is different from the PIN code included in the person authentication data which has been read from the person authentication card 2 and has been decrypted, it is determined that the user who is going to use the portable settlement terminal 1 is not an authorized user of the portable settlement terminal 1.

Because the authentication of the user who is going to use the portable settlement terminal 1 is performed by comparing the PIN code input via the input unit 13 with the PIN code stored in the person authentication card 2 brought close to the portable settlement terminal 1 as described above, it is not necessary that the PIN code used in the authentication of the user be registered in the portable settlement terminal 1.

This makes it possible for a plurality of users to use the same portable settlement terminal 1. In this case, each user has his/her own person authentication card 2 in which his/her uniquely assigned PIN code is stored, and each user knows his/her own PIN code. This system allows only authorized users having his/her own person authentication card 2 to use the portable settlement terminal 1, but any other person cannot use the portable settlement terminal 1. Thus, the portable settlement terminal 1 is prevented from being used in an unauthorized manner. Besides, it is not necessary to perform any troublesome task to register PIN codes of respective users in the portable settlement terminal 1. This is very convenient for users.

As described above, if a user inputs his/her PIN code via the input unit 13 while maintaining the person authentication card 2 at a location close to the portable settlement terminal 1, the portable settlement terminal 1 authenticates the user. If the authentication is successfully passed, the portable settlement terminal 1 activates a settlement function to make it possible to make settlement using the electronic money card 3.

More specifically, when the electronic money card 3 is brought close to the reader/writer 11, the remaining amount of the electronic money stored in the electronic money card 3 (the IC chip 3A) is read, an amount to be paid is subtracted from the remaining amount, and the resultant amount is written in the electronic money card 3. Note that information indicating the amount to be paid is input by the user of the portable settlement terminal 1 by operating the input unit 13.

Fig. 3 shows an example of electronic money data stored in the electronic money card 3.

As shown in Fig. 3, a key K2 is set in the electronic money data. Only when authentication using this key K2 is successful, it is allowed to read and write electronic money data. A key corresponding to the key K2 is registered in advance in the portable settlement terminal 1, and mutual authentication is performed between the portable settlement terminal 1 and the IC chip 3A.

If the settlement is successfully completed, a part of information identifying a person who made the settlement is written together with a terminal code identifying the portable settlement terminal 1 in the electronic money card 3 so that the person who made the settlement (the user of the portable settlement terminal 1) can be identified by the information.

The process associated with portable settlement terminal 1 will be described in further detail later with reference to a flow chart.

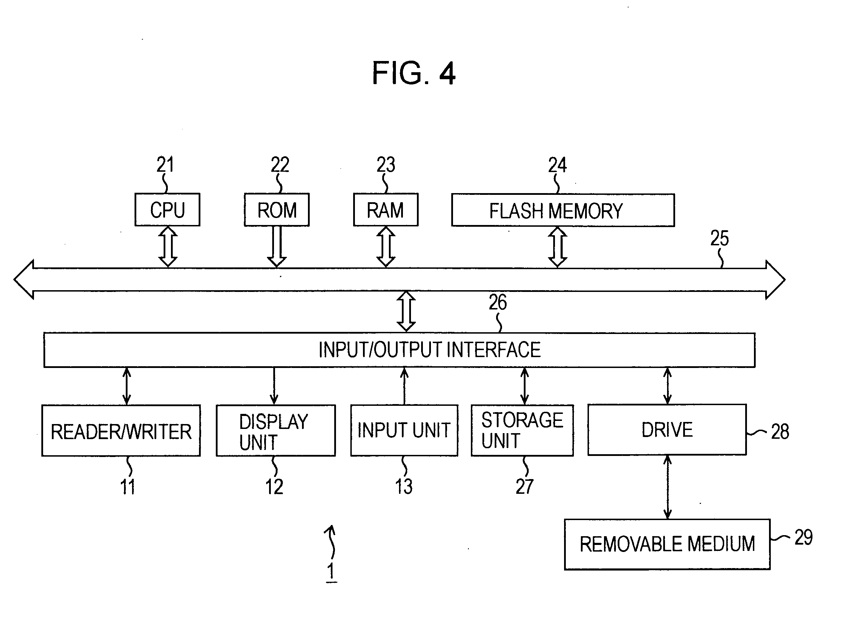

Fig. 4 is a block diagram showing an example of a hardware configuration of the portable settlement terminal 1. In Fig. 4, similar parts to those shown in Fig. 1 are denoted by similar reference numerals, and a duplicated description thereof is omitted herein.

A CPU (Central Processing Unit) 21 performs various processes in accordance with programs stored in a ROM (Read Only Memory) 22 or a storage unit 27. A RAM (Random Access Memory) 23 stores a program executed by the CPU 21 and also stores data used in the execution of the program.

In addition to the program for performing the settlement process, a key used to decrypt the encrypted person authentication data stored in the person authentication card 2, and a key used in authentication using the key K2 stored in the electronic money card 3 are also stored in the flash memory 24. The CPU 21, the ROM 22, the RAM 23, and the flash memory 24 are constructed in the form of tamper-resistant chips.

The CPU 21, the ROM 22, the RAM 23, and the flash memory 24 are connected to each other via a bus 25 and also connected to an input/output interface 26 via the bus 25.

In the example shown in Fig. 4, the input/output interface 26 is connected to the reader/writer 11, the display unit 12, the input unit 13, and the storage unit 27. The storage unit 27 is realized, for example, using a hard disk drive and is used to store programs executed by the CPU 21 and various kinds of data.

As shown in Fig. 4, the input/output interface 26 is also connected to a drive 28 as required such that the key and/or programs are supplied to the portable settlement terminal 1 via a removable medium 29 such as a semiconductor memory mounted on the drive 28.

Fig. 5 is a block diagram showing an example of a functional configuration of the portable settlement terminal 1. At least part or all of functional blocks shown in Fig. 5 are implemented by executing a particular program on the CPU 21 shown in Fig. 4.

As shown in Fig. 5, the portable settlement terminal 1 is configured so as to include a read/write controller 31, a person authentication unit 32, a settling unit 33, a timer controller 34, and a power controller 35.

The read/write controller 31 controls the reader/writer 11 such that electric power is supplied to an IC chip of a non-contact IC card such as the person authentication card 2 or the electronic money card 3 brought close to the reader/writer 11, and information is read or written from or to the IC chip.

More specifically, when the person authentication card 2 is brought close to the reader/writer 11, the read/write controller 31 controls the reader/writer 11 such that person authentication data is read from the person authentication card 2 and transferred to the person authentication unit 32. In the settlement process performed by the settling unit 33 in conjunction with the electronic money card 3 after authentication of a user is successfully completed, the read/write controller 31 controls the controls the reader/writer 11 such that the remaining amount of the electronic money data is read from the electronic money card 3 and the amount obtained as a result of the subtraction is written in the electronic money card 3.

When a non-contact IC card such as the person authentication card 2 or the electronic money card 3 brought close to the portable settlement terminal 1 is detected, the read/write controller 31 performs mutual authentication with the non-contact IC card by a challenge-and-response method or the like. If the authentication is successfully completed, the read/write controller 31 performs further communication with the non-contact IC card by encrypting information using a key obtained via the mutual authentication.

If the person authentication unit 32 receives the person authentication data from the read/write controller 31, the person authentication unit 32 decrypts the encrypted person authentication data by using a key prestored in the person authentication unit 32, and extracts person identification information from the decrypted person authentication data. In accordance with the extracted person identification information, a message prompting a user to input his/her PIN code is displayed on the display unit 12. If the user inputs his/her PIN code via the input unit 13 in response to the message prompting the user to input the PIN code, the person authentication unit 32 authenticates the user by comparing the input PIN code with a PIN code included in the person authentication data. If the person authentication unit 32 determines that the user is authentic, the person authentication unit 32 outputs information indicating that the user is authentic to the settling unit 33 and the timer controller 34.

The settling unit 33 is activated in response to receiving the information indicating that the user is authentic from the person authentication unit 32. The settling unit 33 communicates with the electronic money card 3 brought close to the portable settlement terminal 1 via the read/write controller 31 and performs the settlement process using the electronic money data stored in the electronic money card 3. In the settlement process, if necessary, the settling unit 33 displays on the display unit 12 a message prompting the user to bring the electronic money card 3 close to the reader/writer 11.

The timer controller 34 controls a timer such that when elapse of a particular time from a reference time is detected by the timer, the timer controller 34 notifies the power controller 35 of the elapse of the particular time to turn off the power of the portable settlement terminal 1.

The power controller 35 controls supply of electric power to various parts of the portable settlement terminal 1. More specifically, the power controller 35 turns off electric power supplied to various parts of the portable settlement terminal 1 under the control of the timer controller 34.

Referring to a flow chart shown in Fig. 6, a process performed by the portable settlement terminal 1 configured in the above-described manner is described below.

If a user presses a power button and thus the power of the portable settlement terminal 1 is turned on, then, in step S1, the timer controller 34 starts a 5-min timer.

In step S2, the read/write controller 31 searches for the person authentication card 2 by radiating an electromagnetic wave from the reader/writer 11. In step S3, the read/write controller 31 determines whether the person authentication card 2 has been detected.

If the answer to step S3 is that the person authentication card 2 has not been detected, then the read/write controller 31 advances the process to step S4. In step S4, the read/write controller 31 checks the elapse of time being measured by the timer controller 34 to determine whether 5 minutes have elapsed since the timer was started in step S1.

If the determination in step S4 is that 5 minutes have not yet elapsed, then the read/write controller 31 returns the process to step S2 to continue the searching for the person authentication card 2.

In a case where the determination in step S3 is that the person authentication card 2 brought close to the reader/writer 11 has been detected, then the read/write controller 31 advances the process to step S5. In step S5, the read/write controller 31 requests the person authentication card 2 to transmit identification information. Using the identification information transmitted from the person authentication card 2, the read/write controller 31 performs mutual authentication with the person authentication card 2 by the challenge-and-response method or the like.

In step S6, the read/write controller 31 determines whether the mutual authentication process is completed. If the answer to step S6 is that the mutual authentication process has not yet been completed, the process proceeds to step S4. However, if it is determined in step S6 that the mutual authentication process has been completed, the process proceeds to step S7.

In step S7, the read/write controller 31 reads the person authentication data from the person authentication card 2 and transfers the read person authentication data to the person authentication unit 32.

In step S8, the person authentication unit 32 decrypts the encrypted person authentication data received from the read/write controller 31 and extracts person identification information from the decrypted person authentication data. In accordance with the extracted person identification information, a message prompting a user to input his/her PIN code is displayed on the display unit 12.

In step S9, the person authentication unit 32 determines whether inputting of the PIN code by the user is completed. If the inputting is not completed, the process waits in step S9 until the inputting is completed.

If it is determined in step S9 that the inputting of the PIN code by the user is completed, the person authentication unit 32 advances the process to step S10. In step S10, person authentication unit 32 verifies the PIN code input by the user by comparing it with a PIN code included in the person authentication data.

In step S11, the person authentication unit 32 determines whether the PIN code input by the user is identical to the PIN code included in the person authentication data. If the PIN code input by the user is not identical to the PIN code included in the person authentication data, the process proceeds to step S12. In step S12, a determination is made as to whether 5 minutes have elapsed since the timer was started in step S1.

If the determination in step S12 is that 5 minutes have not yet elapsed, then the person authentication unit 32 returns the process to step S9 to prompt the user to reinput his/her PIN code. Thereafter, the process described above is repeated. If a negative determination as to the validity of the PIN code input by the user with respect to the PIN code included in the person authentication data is made a predetermined number of times or more, the portable settlement terminal 1 may be locked so that the user is not allowed to use it.

In a case where the answer to step S11 is that the PIN code input by the user is identical to the PIN code included in the person authentication data, then the person authentication unit 32 outputs information indicating that the input PIN code is valid to the settling unit 33 and the timer controller 34.

In step S13, the timer controller 34 starts a 60-minute timer.

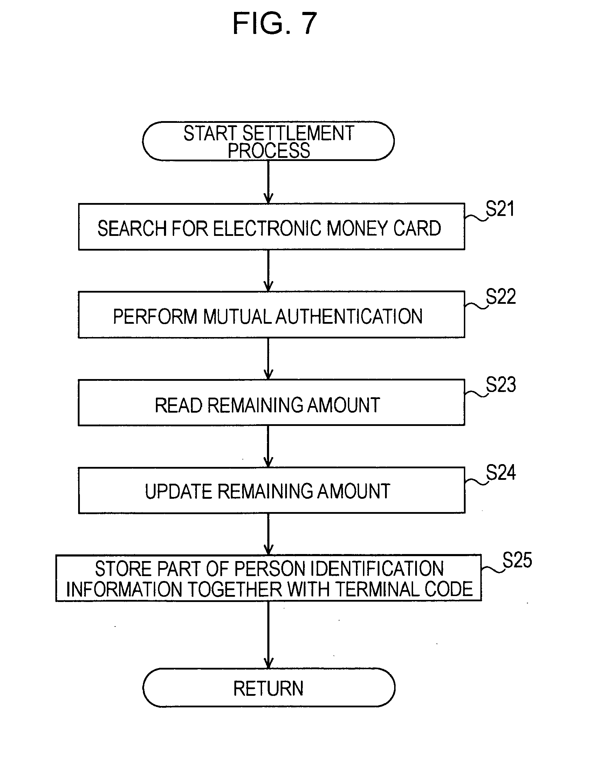

In step S14, the settling unit 33 performs the settlement process. In the settlement process, the settling unit 33 communicates with the electronic money card 3 via the read/write controller 31 and performs the settlement using the electronic money data stored in the electronic money card 3, as will be described in further detail later with reference to a flow chart shown in Fig. 7.

If the settlement process with the electronic money card 3 is completed, then in step S15, the settling unit 33 determines whether 60 minutes have elapsed since the timer was started in step S13. If the determination in step S13 is that 60 minutes have not yet elapsed, then the process returns to step S14 to perform a settlement process with an electronic money card or the like other than the electronic money card 3. That is, in the present embodiment, after the user is authenticated, the user is allowed to perform settlement using the portable settlement terminal 1 for a period up to 60 minutes. The maximum allowable period is not limited to 60 minutes, but it may be set differently such that an owner of a shop, for which the user of portable settlement terminal 1 works, can arbitrarily define the maximum allowable period in which settlement is allowed to be performed.

If it is determined in step S15 that 60 minutes have elapsed since the timer was started in step S13, then the settling unit 33 advances the process to step S16.

In step S16, the timer controller 34 controls the power controller 35 to turn off the power of the portable settlement terminal 1. Thus, the present process is ended. Also in an a case where it is determined in step S4 or S12 that 5 minutes have elapsed since the timer was started in step S1, the power of the portable settlement terminal 1 is turned off and the process is ended.

The details of the settlement process in step S14 shown in Fig. 6 are described below, referring to the flow chart shown in Fig. 7.

In step S21, the read/write controller 31 searches for the electronic money card 3 by radiating an electromagnetic wave from the reader/writer 11. If the electronic money card 3 is detected, the process proceeds to step S22.

In step S22, the read/write controller 31 requests the electronic money card 3 to transmit identification information. Using the identification information transmitted from the electronic money card 3, the read/write controller 31 performs mutual authentication with the electronic money card 3 by the challenge-and-response method or the like. In the mutual authentication process, for example, the key K2 stored in the electronic money card 3 and the key corresponding thereto managed by the settling unit 33 are used as required.

If the mutual authentication is completed, the process proceeds to step S23. In step S23, the settling unit 33 reads the remaining amount of the electronic money stored in the electronic money card 3. The process then proceeds to step S24. In step S24, an amount to be paid by the user of the electronic money card 3 is subtracted from the remaining amount, and the resultant amount is written in the electronic money card 3.

In step S25, the settling unit 33 stores a part of person identification information included in the person authentication data acquired by the person authentication unit 32 from the person authentication card 2, together with a terminal code, into the electronic money card 3. If step S25 is completed, the process returns to step S14 in Fig. 6. Note that instead of storing the part of the person identification information, the entire person identification information may be stored together with the terminal code in the electronic money card 3.

In the present embodiment of the invention, as described above, authentication of a user who is going to use the portable settlement terminal 1 is performed by comparing a PIN code input by the user via the input unit 13 with a PIN code stored in the person authentication card 2 brought close to the portable settlement terminal 1.

When the person authentication card 2 is not detected within a predetermined period or when validation of the input PIN code with respect to the PIN code stored in the person authentication card 2 is not achieved within a predetermined period of time, the power of the portable settlement terminal 1 is automatically turned off to prevent the battery of the portable settlement terminal 1 from being consumed.

In the embodiments described above, the settlement process is limited by the timer. Alternatively, the settlement process may be limited by an operation performed by the user or by the cumulative amount of settlement.

In the embodiments described above, the hardware keys disposed on the surface of the case of the portable settlement terminal 1 are used to input the PIN code. Alternatively, software keys displayed on the display unit 12 of the portable settlement terminal 1 may be used to input the PIN code.

In the embodiments described above, the authentication using the PIN code stored in the person authentication card 2 and the PIN code input by the user is performed by the portable settlement terminal 1. Authentication may be performed in a similar manner by a fixed-type terminal installed in a shop or the like. The card for use in authentication is not limited to the card of the non-contact type, but a contact-type card may be used.

The sequence of processing steps described above may be performed by means of hardware or software. When the processing sequence is executed by software, a program forming the software may be installed from a program storage medium onto a computer which is provided as dedicated hardware or may be installed onto a general-purpose computer capable of performing various processes in accordance with various programs installed thereon.

As for the program storage medium for storing the program to be installed into the computer and executed by the computer, for example, the removable medium 29, the ROM 22, the hard disk drive used as the storage unit 27 may be employed. The program may be stored in such a medium temporarily or permanently.

In the present description, the steps described in the program may be performed either in time sequence in accordance with the order described in the program or in a parallel or separate fashion.

It should be understood by those skilled in the art that various modifications, combinations, sub-combinations and alterations may occur depending on design requirements and other factors insofar as they are within the scope of the appended claims or the equivalents thereof.

## Claims

1. A portable terminal comprising:
acquisition means for acquiring authentication information including identification information from a first non-contact IC card brought close to the portable terminal;
authentication means for authenticating a user on the basis of identification information input by the user by operating one or more keys and identification information included in the authentication information acquired by the acquisition means; and
settlement means for, if the user is determined to be authentic by the authentication means, performing a settlement process in accordance with electronic money information stored in a second non-contact IC card brought close to the portable terminal.

2. The portable terminal according to Claim 1, further comprising display means for displaying information, wherein
the authentication means displays, on the display means, information prompting a user identified by information included in the authentication information to input identification information by operating one or more keys, and verifies the authenticity of the user on the basis of the identification information input by the user and the identification information included in the authentication information.

3. The portable terminal according to Claim 1,
wherein:
the authentication information is stored in an encrypted form in the first non-contact IC card; and
the authentication means decrypts the encrypted authentication information acquired by the acquisition means by using key information prestored in the authentication means thereby acquiring identification information used in verification of the authenticity of the user.

4. The portable terminal according to Claim 1, wherein when the settlement means completes the settlement process, the settlement means stores information included in the authentication information acquired by the acquisition means into the second non-contact IC card together with identification information identifying the portable terminal.

5. A settlement method comprising the steps of:
acquiring authentication information including identification information from a first non-contact IC card brought close to a portable terminal;
authenticating a user on the basis of identification information input by the user by operating one or more keys and identification information included in the authentication information acquired in the acquisition step; and
if the user is determined to be authentic in the authentication step, performing a settlement process in accordance with electronic money information stored in a second non-contact IC card brought close to the portable terminal.

6. A program executable by a computer to perform a process including the steps of:
acquiring authentication information including identification information from a first non-contact IC card brought close to a portable terminal;
authenticating a user on the basis of identification information input by the user by operating one or more keys and identification information included in the authentication information acquired in the acquisition step; and
if the user is determined to be authentic in the authentication step, performing a settlement process in accordance with electronic money information stored in a second non-contact IC card brought close to the portable terminal.

7. A portable terminal comprising:
an acquisition unit adapted to acquire authentication information including identification information from a first non-contact IC card brought close to the portable terminal;
an authentication unit adapted to authenticate a user on the basis of identification information input by the user by operating one or more keys and identification information included in the authentication information acquired by the acquisition unit; and
a settlement unit adapted to, if the user is determined to be authentic by the authentication unit, perform a settlement process in accordance with electronic money information stored in a second non-contact IC card brought close to the portable terminal.
